(19) Europäisches Patentamt
European Patent Office
Office européen des brevets

(11) **EP 1 886 864 B1**

(12) **EUROPEAN PATENT SPECIFICATION**

(45) Date of publication and mention
of the grant of the patent:
**10.06.2009   Bulletin 2009/24**

(51) Int Cl.:
***B60K 23/08*** *(2006.01)*

(21) Application number: **06016308.6**

(22) Date of filing: **04.08.2006**

(54) **Method of controlling torque transfer direction in a limited slip differential**

Methode zur Steuerung der Drehmomentübertragungsrichtung in einem Differential mit begrenztem Schlupf

Méthode de contrôle de la direction de transfert de couple pour transmission différentielle de type à glissement limité

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**13.02.2008   Bulletin 2008/07**

(73) Proprietor: **GM Global Technology Operations, Inc.**
**Detroit, MI 48265-3000 (US)**

(72) Inventors:
• **Carlen, Mattias**
**41311 Göteborg (SE)**
• **Yngve, Simon**
**41483 Göteborg (SE)**

(74) Representative: **Daniel, Ulrich W.P.**
**Adam Opel AG,**
**Patent- und Markenrecht A0-02**
**65423 Rüsselsheim (DE)**

(56) References cited:
**EP-A2- 1 403 124          DE-A1- 4 423 965**
**GB-A- 2 321 287           GB-A- 2 383 567**
**US-A1- 2001 025 219       US-A1- 2005 225 477**

## Description

## FIELD OF THE INVENTION

The present invention generally relates to control strategies for electronically controlled limited slip differentials and particularly relates to a method of controlling torque transfer direction in an electronically controllable limited slip differential (LSD).

## BACKGROUND ART

In recent years, in automotive industries, more and more cars have been equipped with electronically controlled stability control systems on account of the fact that many of the severe traffic accidents result from a loss of control of the vehicle. Stability control systems typically employ the brakes to stabilize the vehicle in critical situations, which, however, necessarily results in a net-reduction of the vehicle's speed. Particularly in view of driving pleasure, instead of using the brakes, it seems more desirable to redistribute the driving force between the right and left wheels, which can be done limiting the allowable speed difference in the differential, e. g., using an electronically controlled limited slip differential.

Differentials as such are well-known in the prior art. They allow a pair of output shafts operatively coupled to an input shaft to rotate at different speeds, thereby allowing the wheel associated with each output shaft to maintain traction with the road while the vehicle is turning. More specifically, differentials essentially distribute the torque provided by the input shaft between the output shafts. Most modern cars often merely have a completely open differential which for most cases works in a satisfying manner.

Completely open differentials, however, are unsuitable in slippery conditions where one wheel experiences a much lower coefficient of friction than the other wheel, for example, when one wheel of a vehicle is located on a patch of ice and the other wheel is on dry pavement. In such a condition, the wheel experiencing the lower coefficient of friction loses traction and a small amount of torque to that wheel will cause a rapid spinning. Since the maximum amount of torque that can be developed on the wheel with traction is equal to the torque on the wheel without traction (i.e. the slipping wheel), the engine is unable to develop torque and the wheel with traction may be unable to rotate, with the result that the vehicle will stay stationary or move very slowly.

Up to date, a variety of limited slip differentials have been developed to limit wheel slippage under such conditions. Ideal LSDs act as varying differentials between their two extreme operating states i.e. completely engaged or not engaged. To this end, LSDs provided for limiting slippage typically use a frictional clutch mechanism, either clutch plates or a frustoconical engagement structure, as well as a specific biasing mechanism to apply load between side gears connected to the output shafts and the differential casing connected to the input shaft.

In a purely mechanical variant thereof, the LSD's clutch mechanism may use a spring to initially preload the side gears so that a minimum torque can always be applied to the wheel having traction. However, such pre-loaded clutches are always engaged and thus are susceptible to wear thus causing undesired repair and replacements costs.

Correspondingly improved LSDs use mechanical or hydraulic arrangements to apply locking torque to the side gears on basis of a sensed difference in rotational speed or torque between the two output shafts - called "speed sensitive differentials" or "torque sensitive differentials", which, however, are complicated in structure, and due to their passive nature may not be controlled.

In order to overcome such a drawback, in recent years, electronically controlled LSDs have been developed that enable control of actuation in response to a (selectable) predetermined differentiation condition of the differential using an electronically controlled clutch. In other words, the electronically controlled LSD is a differential where the differentiating speed can be restricted using a controllable clutch that can be actuated electronically using an actuating means, such as an electromagnet, so that in contrast to passive LSDs it becomes possible to control the LSD independently of the differentiating torque or speed of the output shafts. The controllable variable in the electronically controlled LSD is the torque which can be transferred between left and right wheels by locking or unlocking the clutch.

Conventionally, control of electronically controllable LSDs is performed in a closed loop control system for instance using a proportional-integral-derivative (PID)-controller, which is a common feedback loop component in industrial control systems to control any measurable process variable which can be affected by manipulating any other process variable.

In principal, in a typical PID-controller, an error signal, conventionally defined to be the calculated difference between a reference value and a measured value of the process value under consideration, is used for calculating a control signal to be supplied to an actuating means that brings the measured process value back to its desired reference value.

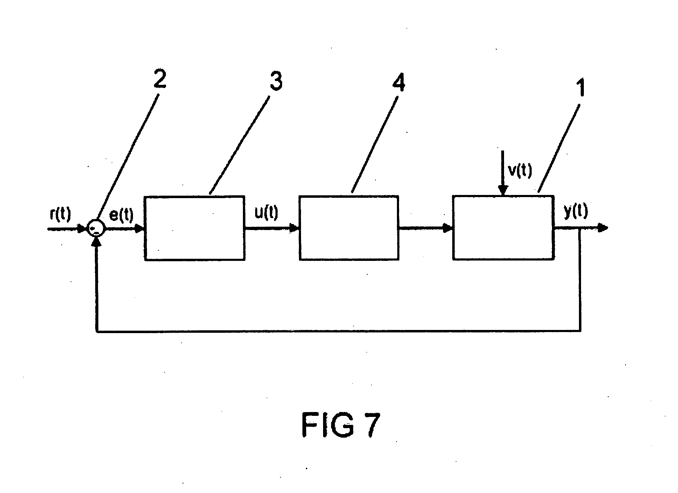

Reference is now made to FIG. 7 illustrating the principal layout of a conventional closed loop control system based on a PID-controller, which, for instance, can be used to control an LSD. Accordingly, the control system includes a system 1 to be electronically controlled such as an LSD, a differentiating means 2 being provided with the measured value y(t) of any measurable system variable and also with a reference value r(t) that is preset or determined to calculate an error signal e(t) thereof as-above described, a controller 3 for calculating an output (control) signal u (t) on basis of the input error signal e(t), and an actuator 4 for acting on the system 1 to bring the measured system value back to its desired reference value.

More specifically, in such control system, in the PID-controller, correction of the process value is calculated from the error signal in three ways: In order to handle the present, the error is multiplied by a negative constant and added to the controlled quantity. In order to handle the past, the error is integrated over a period of time, multiplied by a negative constant and then added to the controlled quantity. And, in order to handle the future, the first derivative of the error over time is calculated, multiplied by another negative constant and then added to the controlled quantity.

Accordingly, the PID-controller's output u(t) used as control signal for the actuating means may be written as sum of three contributing parts:

$$u(t) = P_{contrib} + I_{contrib} + D_{contrib}$$

where $P_{contrib}$, $I_{contrib}$ and $D_{contrib}$ are the feedback contributions from the P-controller, I-controller, and D-controller, as defined below:

$$P_{contrib} = K_p e(t)$$

$$I_{contrib} = K_i \int_{-\infty}^{t} e(t)dt$$

$$D_{contrib} = K_d \frac{de(t)}{dt}$$

with $K_p$, $K_i$ and $K_d$ being proportional constants: proportional gain, integral gain and derivative gain, respectively.

Electronically controlled LSDs embedded in such closed loop control systems based on PID-controllers are well-known to those of skill in the art, and, therefore, need not be further detailed here.

As already explained above, in case one of the driving wheels is located on ground with higher road friction coefficient μ than the other wheel, if the differential is open, the wheel with lower road friction coefficient μ will start to spin if too much torque is applied. However, when this happens, the other wheel can only receive as much torque as the wheel with lower road friction coefficient μ can put into tractive force. If the road friction coefficient μ is very low, the tractive force is also very low, which means that the total longitudinal force of the vehicle is also low that will cause the acceleration to be low, resulting in that the vehicle will almost not move forward or move very slowly. Such a situation where one wheel experiences more traction than the other is convention-

ally called a "split-μ condition".

Engaging the differential clutch in such a split-μ condition will bring down the wheel speed difference which occurs due to the low-μ wheel spin increase. This also transfers torque via the clutch from the side with the low μ to the other. This moment transfer, however, can, if the differential is locked and a high engine torque is requested, cause a yaw rate that will be too high for the driver to handle. Otherwise, in a split-μ condition the driver's steering wheel input may not be interpreted as desire to turn but as desire to stop the car from yawing about its centre of gravity. However, when the vehicle stands still, there will be no yaw rate error, so when the driver applies the throttle the differential will not lock if the only control is on the yaw rate error.

In order to overcome such drawback, according to the present invention, a method of controlling the output signal of a PID-controller for the control of an electronically controllable limited slip differential in a split-μ condition is provided in order to transfer an appropriate amount of torque.

The German published patent application DE 44 23 965 A1 discloses a torque distribution control apparatus for vehicles for distributing the torque of an engine to left and right driving wheels. In such apparatus, a feed-forward control system determines a lateral distribution torque from an engine torque (an opening degree of an accelerator), a number of revolutions of the engine, a vehicle speed and a steering angle. A feed-back control system determines a feed-back torque from a target yaw rate determined from the vehicle speed and the steering angle and an actual yaw rate. A final distribution torque is determined by adding the lateral distribution torque and the feed-back torque at a predetermined ratio and an acutator is driven to distribute the engine torque to the left and right driving wheels on the basis of the final distribution torque.

**SUMMARY OF THE INVENTION**

In light of the above, the present invention discloses a method of controlling an electronically controlled limited slip differential (LSD) in a closed loop control system based on a PID-controller in a vehicle in order to control the vehicle's yaw rate.

The control system includes an electronically controllable limited slip differential that allows a pair of output shafts operatively coupled to an input shaft to rotate at different speeds, thereby allowing the wheel associated with each output shaft to maintain traction with the road while the vehicle is turning. Actuation of the LSD by means of an actuating means is made in response to a (selectable) predetermined differentiation condition of the LSD using an electronically controllable clutch actuated by the actuating means.

The control system for controlling the LSD in order to control the vehicle's yaw rate is based on a PID-controller that creates a control signal on basis of a calculated yaw rate error to be supplied to the actuating means for controlling actuation thereof. Conventionally, the yaw rate error is defined to be the difference of a reference yaw rate and a measured yaw rate. The reference yaw rate may be pre-set or else is calculated using specific reference yaw rate determination logic, while the measured yaw rate is measured using specific yaw rate sensing means. The PID-controller's output signal is output to the actuating means for actuating thereof in accordance therewith with the actuating means being operatively coupled to the LSD for control thereof.

The system further comprises a dedicated logic device, called split-$\mu$ feed forward logic adapted for outputting a control signal that is added to the control signal of the PID-controller to calculate a new control signal for control of the LSD.

The system further comprises a reference yaw rate determination logic for determining a reference yaw rate and an adaptation logic for creating an adapted yaw rate error signal to be provided to said PID-controller, said adaptation logic being interconnected between said reference yaw rate determination logic and said PID-controller and being provided with said reference yaw rate and a measured yaw rate as measured by a yaw rate sensing means.

The method of controlling an electronically controlled limited slip differential in a closed loop control system based on a PTD-controller comprises the following steps:

- sensing of the driver's throttle input and outputting a split-$\mu$ feed forward logic control signal formed in proportionality to the driver's throttle input; and
- adding of the split-$\mu$ feed forward logic control signal to the output signal of the PID-controller to create a control signal for controlling the LSD.
- adapting said yaw rate error when releasing throttle in making a turn performed by said adaptation logic, which adaptation of the yaw rate error comprises the steps of:
- initiating of adaptation of the yaw rate error;
- dividing of the measured yaw rate by the reference yaw rate to calculate a yaw rate ratio at initiation of the adaptation; and
- multiplying said yaw rate ratio with the reference yaw rate during said throttle off condition to create an adapted error rate signal to be supplied to said PID-controller.

Upon doing so, throttle input is interpreted as an acceleration request, so if the throttle is pressed down rapidly, a high acceleration is desired. The differential thus can be locked according to the throttle request, and, together with a rate limiter, may also take into account the steering wheel angle or the steering wheel turning rate: if the driver steers actively, this is interpreted as a more active driving and therefore the differential is locked faster, thereby allowing a more responsive vehicle.

Other and further objects, features and advantages of the invention will appear more fully from the following description.

## BRIEF DESCRIPTION OF THE DRAWINGS

The accompanying drawings, which are incorporated in and constitute a part of the specification, illustrate embodiments of the invention, and together with the general description given above and the detailed description given below, serve to explain the principles of the invention.

FIG. 1 is a diagram depicting an exemplary conceptual layout of the control strategy for the electronically controlled LSD in a closed loop control system on basis of a PID-controller;

FIG. 2 is a diagram depicting yaw rate [deg/sec] versus time [sec] in a case when the driver making a turn holds the steering wheel in a same angle and releases the throttle after an time period of 3 seconds without engagement of the differential clutch;

FIG. 3 is a diagram depicting adaptation of the measured yaw rate [deg/sec] and the reference yaw rate [deg/sec] versus time [sec] during throttle off in making a turn;

FIG. 4 illustrates the measured yaw rate [deg/sec] versus time [sec] during throttle off in making a turn with the LSD being open (dashed line) and being locked (solid line) adapting the yaw rate error;

FIG. 5 is a diagram depicting an exemplary flux diagram of a method to decide whether the wheel speed difference of left and right wheels can be used to determine into which direction torque transfer is possible;

FIG. 6 is a diagram depicting as an example vehicle velocity [km/h] over time [sec] of a vehicle driving on a split-$\mu$ surface, in case of an electronically controlled LSD using split-$\mu$ feed forward logic and in case of an open differential;

FIG. 7 illustrates the principal layout of a conventional closed loop control system based on a PID-controller.

## DETAILED DESCRIPTION OF THE INVENTION

Embodiments of the present invention will be described in detail below with reference to the accompanying drawings, where like designations denote like or similar elements.

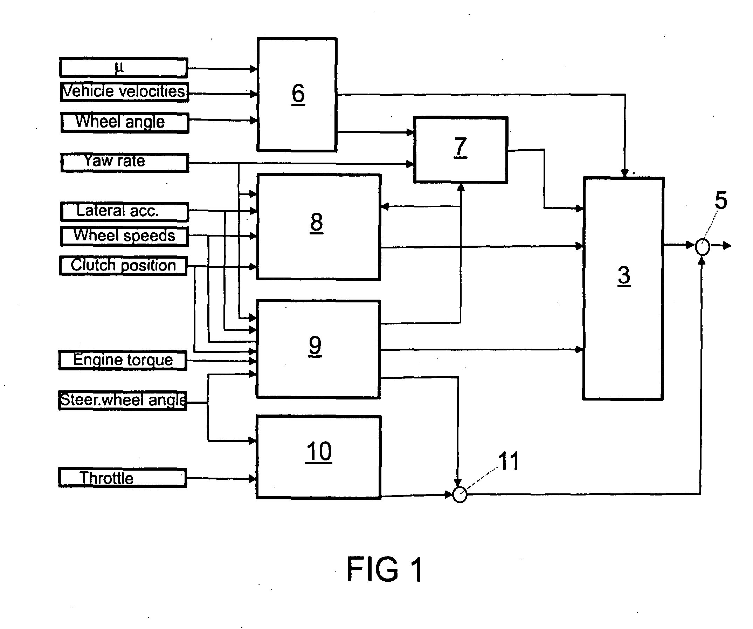

First, reference is made to FIG. 1 which depicts an exemplary conceptual layout of the control strategy for the electronically controlled LSD in a closed loop control system on basis of a PID-controller.

Accordingly, the closed loop control system is based on a PID-controller 3 with variable parameters, the output signal (c) of which being a control signal supplied to an actuating means (not shown in Fig. 1) acting on the electronically controllable LSD (not shown in Fig. 1) on basis of the control signal input. The output signal of the PID-controller 3 is used to control on the yaw rate error of the vehicle.

In the control system, on the upstream side of the PID-controller 3, a plurality of logic devices or components ("logic") are arranged, that are arranged to update parameters for usage by the PID-controller 3 to give satisfying control during different driving conditions.

The logic components include a bicycle reference model logic 6 adapted for creating and outputting a reference yaw rate signal, an adaptation logic 7 adapted for adapting and outputting a yaw rate error signal, an ability signal logic 8 adapted for creating and outputting an ability signal to be multiplied with the yaw rate error signal, a scenario identification logic 9 adapted for creating, changing and outputting parameters of the PID-controller, and a split-$\mu$ feed forward logic 10 adapted for creating and outputting a control signal to be added with the PID-controller output signal in a split-$\mu$ condition.

Outputs of the bicycle reference model logic 6, the adaptation logic 7, the ability signal logic 8 and the scenario identification logic 9 respectively are connected with the input side of the PID-controller 3, so that output signals of these logic devices can directly be supplied to the PID-controller 3. Otherwise output of the split-$\mu$ feed forward logic 10 is connected to an adder means 5, so that an output signal of the split-$\mu$ feed forward logic 10 and an output signal of the PID-controller 3 can be added.

The logic components are provided with a plurality of input signals as is explicitly given on the their left sides. These input signals will be measured by dedicated sensing means or, alternatively, will be estimated.

Accordingly, the bicycle reference model logic 6 is provided with the road friction coefficient $\mu$, which coefficient typically is estimated, the vehicle velocities, that is to say signals describing the longitudinal and lateral velocities of the vehicle, which typically are measured using longitudinal velocity and lateral velocity sensing means, and the wheel angles, which typically are measured using wheel angle sensing means. The bicycle reference model logic 6 outputs a yaw rate reference signal based on its input values that is supplied to the adaptation logic 7.

The adaptation logic 7 on its input side is provided with a reference yaw rate being an output signal of the bicycle reference model logic 6. It further is provided with a measured yaw rate signal that is measured using a yaw rate signal sensing means. On its output side, the adaptation logic 7 outputs a yaw rate error signal supplied to the PID-controller 3 for further processing to create a control signal for controlling the LSD.

The ability signal logic 8 on its input side is provided with the measured yaw rate, a lateral acceleration, which is measured using a lateral acceleration sensing means, the wheel speeds, that is to say signals of the wheel speeds which are measured using wheel speed sensing means, and a clutch position, which is measured using a clutch position sensing means. The output signal of the ability signal logic 8 is supplied to the PID-controller 3 to be multiplied with the yaw rate error signal.

The scenario identification logic 9, on its input side, is provided with the measured yaw rate, the measured lateral acceleration, the wheel speeds, the clutch position, an engine torque, which is measured using an engine torque sensing means, and a steering wheel angle, which is sensed using a steering wheel angle sensing means. Output signals of the scenario identification logic 9, inter alia, are supplied to the PID-controller 3 and the adaptation logic 7.

The split-$\mu$ feed forward logic 10, on its input side, is provided with the steering wheel angle and a throttle signal, which is measured using a throttle sensing means. An output signal of the split-$\mu$ feed forward logic 10 is supplied to a processing means 11 which is also provided with an output signal of the scenario identification logic 9 in order to calculate a control signal supplied to the adder means 5. The adder means 5 is further provided with an output signal of the PID-controller in order to calculate a control signal supplied to the actuating means for controlling the LSD.

All sensing means as above-cited and used for sensing of input signals supplied to the logic devices as such are well-known to those of skill in the art, and, hence, need not be further detailed here.

Now, when releasing throttle in a turn, the vehicle receives an increase in yaw rate which is desirable to eliminate to thus make the vehicle maintain the path. When releasing the throttle, the engine torque drops and becomes negative, which results in a deceleration of the vehicle. When this happens, due to a longitudinal load transfer associated therewith, the load on the front axle will increase while the load on the rear axle decreases. If no change is made in the steering wheel angle the car will describe a tighter turn having a reduced radius. The desired behaviour for the vehicle when performing the throttle off, however, is to maintain the current curve radius while decelerating. In order to maintain the curve radius when the velocity is reduced, the yaw rate has to be reduced, too.

Hence, it is an objective for the control strategy to eliminate the initial yaw rate deviation and to reduce the yaw rate proportional to the vehicle velocity to maintain the path.

In the following, adaptation of the yaw rate error when releasing throttle in a turn is explained.

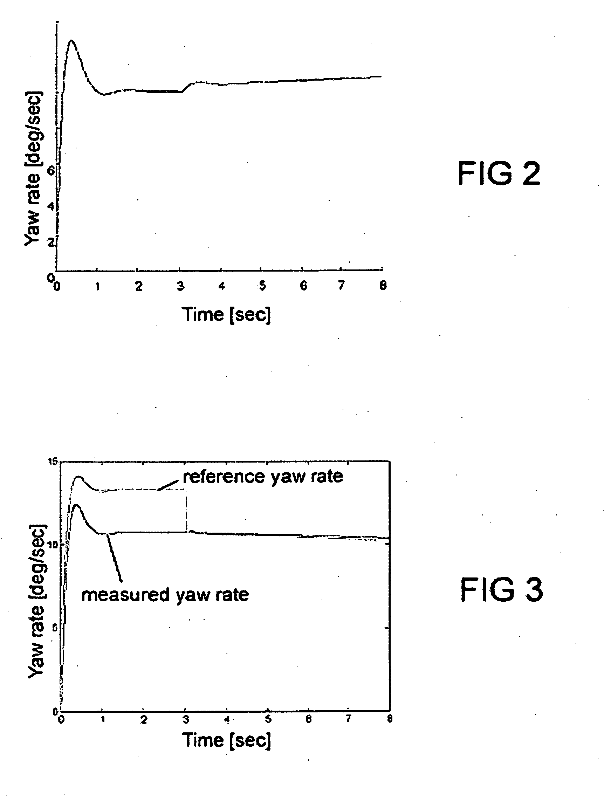

Reference is now made to Fig. 2 which depicts yaw rate [deg/sec] versus time [sec] in a case when the driver making a turn holds the steering wheel in a same angle and releases the throttle after an time period of 3 seconds. As can be seen from Fig. 2, without engaging the differential, the vehicle experiences a slight increase in the yaw rate due to the release of the throttle.

Conventionally, if there is a big difference between the reference yaw rate and the actual yaw rate as measured by the yaw rate sensing means, the PID-controller will not do anything to eliminate the yaw rate deviation due to throttle release because the measured yaw rate signal will not be big enough to cross the reference signal and therefore the differential will remain open. In order to eliminate the yaw rate deviation due to throttle off in a turn, the LSD is to be engaged. However, by locking the LSD completely, the damping effect on the yaw rate will be too large and the vehicle will instead receive an undesirable decrease of the yaw rate making the vehicle under-steered.

Accordingly, in order to determine an appropriate amount of locking of the LSD, instead of trying to control the vehicle's yaw rate to follow the reference yaw rate, the yaw rate control makes the vehicle's yaw rate to follow the deviation of the reference yaw rate. This makes the response fast and accurate.

In order to follow the deviation of the reference yaw rate, according to the present invention, the following adaptation strategy is applied: When throttle off is identified using a throttle position sensing means, a signal to the adaptation logic 7 is given that initializes performance of the yaw rate error adaptation. If the measured yaw rate is smaller than the reference yaw rate, in the adaptation logic 7, adaptation of the yaw rate error takes place. To this end, the measured yaw rate is divided with the reference yaw rate as given at start of the adaptation and such ratio is saved in a memory included in the adaptation logic 7. While the vehicle is maintained in a throttle off condition the saved ratio is used to be multiplied with the reference yaw rate to calculate an adapted yaw rate error signal supplied to the PID-controller 3. Then, control is made based on that adapted yaw rate error signal.

Otherwise, in case the vehicle leaves the throttle off condition, that is to say throttle on is identified by the throttle position sensing means and is communicated to the adaptation logic 7, the yaw rate ratio is set to 1 again, so that control of the LSD may be based on the yaw rate error as given by the difference between the reference yaw rate and the measured yaw rate as is conventionally practiced.

Reference is now made to FIG. 3 depicting adaptation of the measured yaw rate [deg/sec] (solid line) and the reference yaw rate [deg/sec] (dashed line) versus time [sec] during throttle off in making a turn. As can be seen from FIG. 3, in a case when the driver makes a turn holding the steering wheel in a same angle and throttle is released after a time period of 3 seconds, due to adaptation of the yaw rate error signal as above-described and performed in the adaptation logic 7, a significant decrease of the deviation of the yaw rate due to throttle off when making a turn can be observed. As can further be taken from FIG. 3, the measured yaw rate and the reference yaw rate align with each other after adaptation of the yaw rate error signal.

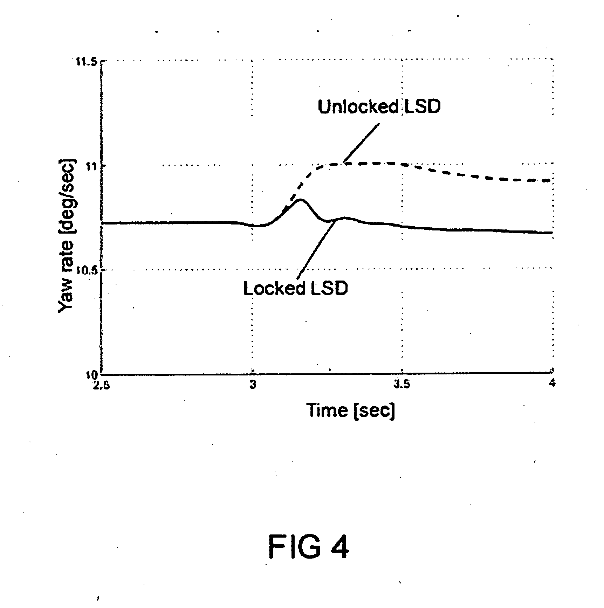

Reference is now made to FIG. 4 illustrating the measured yaw rate [deg/sec] versus time [sec] during throttle off in making a turn with the LSD being open (dashed line) and being locked (solid line) as controlled under performing adaptation of the yaw rate error.

FIG. 4 especially compares to a case, where the initial speed is set to 70 km/h and the driver holds a steering wheel angle of 50 degrees. No control takes place before the throttle off occurs after an elapsed time of 3 sec. When throttle off occurs, the control strategy identifies that by engaging the LSD, it will create the desired behavior. As can be taken from FIG. 4, appropriately locking the LSD (solid line), based on adaptation of the yaw rate error as above-described, deviation of the yaw rate due to throttle off is significantly lowered compared to the open LSD (dashed line).

The bicycle reference model logic 6 uses the well-known bicycle model to calculate the reference yaw rate. In the bicycle model, the vehicle is represented as bicycle, where the two front wheels as well as the two rear wheels may be replaced with one wheel with the cornering being equivalent to both wheels of a same axle. However, using the bicycle model is just an example, and, hence, instead of using the bicycle model, any other reference model may also be used to calculate the reference yaw rate. The bicycle reference model logic 6 also calculates the desired vehicle slip and compares it to the measured vehicle slip. A comparison between the measured vehicle slip and the calculated vehicle slip is supplied to the PID-controller 3 to influence the gains (parameters) in the PID-controller 3.

Now, reference is made to the ability signal logic 8 operatively coupled to the PID-controller 3 for determining into which direction torque may be transferred, which either increases or decreases the yaw rate by locking or unlocking the LSD. The ability signal logic 8 outputs a numeric value which equals 1, 0 or -1 (ability signal), that is passed over to the PID-controller 3 to be used for processing and calculating the control signal for the LSD to decrease the yaw rate of the vehicle in specific driving situations. To this end, the ability signal is used for multiplying with the yaw rate error, so that the sign of the yaw rate error can be varied appropriately since only a positive yaw rate error signal can be used to reduce the yaw rate error.

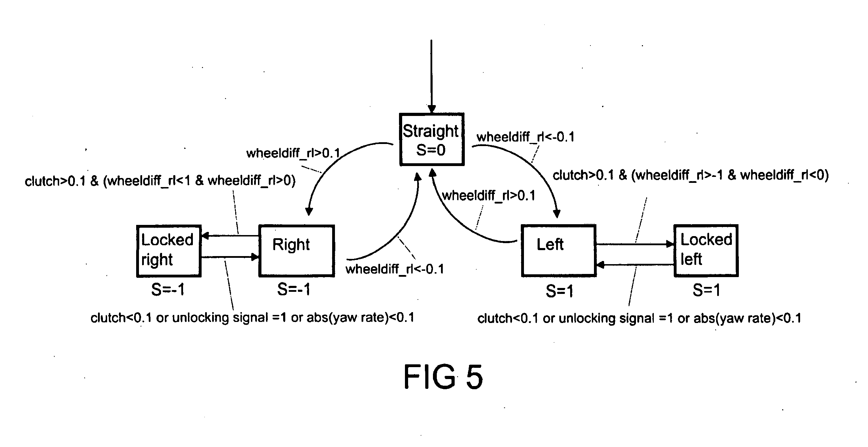

Reference is now made to FIG. 5 depicting an exemplary flux diagram of a method performed by the ability signal logic 8 to decide whether the wheel speed difference of left and right wheels coupled by the LSD can be used to determine into which direction torque transfer is possible.

Accordingly, the control system may take different "states" that are associated with specific values of the ability signal (s), which are a "straigth" state, "right" and "left" states and "locked right" and "locked left" states, respectively.

The entrance state for the ability signal control is the straight state that is associated with a numeric value of the ability signal s=0. In the straight state, no torque transfer is possible, since left and right wheels turn with a same rotational speed.

If one wheel spins faster, depending on the case if this wheel is the right or left wheel, the ability signal s changes from 0 to -1 in the "right" state and from 0 to 1 in the "left" state. In the right state, the right wheel turns faster than the left wheel, which in FIG. 5, as an example, turns 10% faster than the left wheel. In a same way, in the left state, the left wheel turns faster than the right wheel, which in FIG. 5, as an example, turns 10% faster than the right wheel.

In the left or right states, the control system can decide on a wheel speed difference of the wheels coupled by the LSD whether a lock or unlock of the LSD clutch would cause the yaw rate to increase or decrease.

Accordingly, in the control system, the ability signal is used together with the sign of the yaw rate error to determine whether locking will result in an increase or decrease of the yaw rate error. If the ability signal multiplied with the yaw rate error is positive, then the yaw rate error can be decreased by locking the LSD clutch. Otherwise, if the ability signal multiplied with the yaw rate error is negative, then the error cannot be decreased by locking the LSD clutch.

Again referring to Fig. 5, the basic principle of ability signal control is as follows:

For the following considerations it is defined that, for example, a left turn yields a positive yaw rate while a right turn yields a negative yaw rate, and, that the wheel speed difference, for example, is calculated to be the wheel speed of right wheel minus the wheel speed of left wheel (wheeldiff_r1).

The default state is "straight". When the vehicle enters a right turn as seen from above, the left wheel turns faster than the right wheel yielding to a negative value of the wheel speed difference (wheeldiff_rl < 0). The state will then change to "left" and the ability signal is set to +1.

In case that the absolute value of the reference yaw rate is bigger than the absolute value of the measured yaw rate, the yaw rate error becomes negative (considering above definition of the sign of the yaw rate). Then, in order to reduce the yaw rate error, the measured yaw rate must become more negative than what it is, in other words the absolute value of the yaw rate must increase. However, since the outside wheel spins faster than the inner wheel, it is only possible to transfer torque from the outside left wheel to the inside right wheel. According to ability signal control, the yaw rate error is multiplied with the ability signal (+1) to check if it is possible to reduce the yaw rate error. Since the yaw rate error is negative and the ability signal is +1, the product thereof is negative which means that during the present driving condition it is not possible the reduce the yaw rate error by locking the differential. It rather is true, that the yaw rate error would be increased in case the clutch would be engaged.

Otherwise, if the speed of the vehicle is increased during making the right turn, the inner right wheel may loose traction and spin faster than the outer wheel (wheeldiff_rl > 0) and the state will change from "left" to "straight" to "right". When the state has changed to "right", the ability signal will change sign to -1. In that case, the yaw rate error is still negative, but when it is multiplied with the ability signal, the product will become positive. Therefore, the LSD will be engaged to decrease (or even eliminate) the yaw rate error as desired.

Alternatively, when the vehicle makes a left turn, the right wheel turns faster than the left wheel yielding to a positive value of the wheel speed difference (wheeldiff_rl > 0) . The state will then change to "right" and the ability signal is set to -1.

In case that the absolute value of the reference yaw rate is bigger than the absolute value of the measured yaw rate, the yaw rate error becomes positive (considering above definition of the sign of the yaw rate). Then, in order to reduce the yaw rate error, the measured yaw rate must become more positive than what it is. However, since the outside right wheel spins faster than the inner left wheel, it is only possible to transfer torque from the inner left wheel to the outside right wheel. According to ability signal control, the yaw rate error is multiplied with the ability signal (-1) to check if it is possible to reduce the yaw rate error. Since the yaw rate error is positive and the ability signal is -1, the product thereof is negative which means that during the present driving condition it is not possible the reduce the yaw rate error by locking the differential. It rather is true, that the yaw rate error would be increased in case the clutch would be engaged.

Otherwise, if the speed of the vehicle is increased during making the left turn, the inner left wheel may loose traction and spin faster than the outer wheel (wheeldiff_rl < 0) and the state will change from "right" to "straight" to "left". When the state has changed to "left", the ability signal will change sign to +1. In that case, the yaw rate error is still positive, and when it is multiplied with the ability signal, the product will remain positive. Therefore, the LSD will be engaged to decrease (or even eliminate) the yaw rate error as desired.

Now, in case that the differential clutch is at least partially engaged, so that a clutch position signal identifying the clutch locking state and ranging from 0 to 1 to identify a fully open and a fully locked state, respectively, for instance is sensed to be over 0.1, meaning that the clutch is more than 10% locked, and in case that the wheel speed difference is between 0 and 1, the "right" state will change to the "locked right" state, and, in case that the wheel rotational speed difference is between 0 and -1, the "left" state will change to the "locked left" state.

When the state is one of the locked states, the output ability signal is the same as in the previous states. However, when in a locked state, the ability signal (s) no longer depends on the rotational speeds of the wheels, but will instead wait for one of three criteria to be satisfied until the wheel speed difference of the left and right wheels can be used to determine direction of possible torque transfer. (Since there is always a rotational speed difference of left and right wheels present due to mechanical torsion in the output axles, this small wheel speed difference might eventually also be used to decide the possible torque transfer direction when the following criteria are fulfilled.)

Accordingly, starting from the "locked right" or "locked left" states, where wheel speed difference of left and right wheels coupled by the LSD may not be used for yaw rate control, the control system goes back to the "right" and "left" states, respectively, where wheel speed difference of left and right wheels coupled by the LSD can be used for yaw rate control, if it is sensed that a clutch position signal identifying the locking state of the LSD clutch is below 0.1 meaning that the clutch is less than 10% locked, so that the clutch is very close to fully unlocked. Unlocking the clutch can for instance result from the control strategy controlling on the yaw rate. To this end, the ability signal logic is connected with a dedicated clutch position sensing means for sensing of the locking state of the LSD clutch.

Alternatively, starting from the "locked right" or "locked left" states, where wheel speed difference of left and right wheels coupled by the LSD may not be used for yaw rate control, the control system goes back to the "right" and "left" states, respectively, where wheel speed difference of left and right wheels coupled by the LSD can be used for yaw rate control, if a clutch unlocking control signal instructing at least partial unlocking of the clutch is provided to the LSD meaning that the clutch goes from a locked stated to a less locked or even unlocked state. The signal itself is only a flag.

More specifically, such control signal for instance depends on the lateral acceleration of the vehicle and the current road friction coefficient $\mu$. If the lateral acceleration is below a predetermined threshold value, multiplied with $\mu$, and the derivative thereof is negative, above unlocking signal will be output to the actuating means to unlock the differential clutch. Alternatively, if a throttle off signal is recognized, this will also output an unlocking signal to the actuator to unlock the differential clutch.

Further alternatively, starting from the "locked right" or "locked left" states, where wheel speed difference of left and right wheels coupled by the LSD may not be used for yaw rate control, the control system goes back to the "right" and "left" states, respectively, where wheel speed difference of left and right wheels coupled by the LSD can be used for yaw rate control, if the measured yaw rate of the vehicle changes its sign.

If at least one of above three criteria according to the three aspects of the invention is fulfilled, then the locked state is changed from "locked right" to "right" or from "locked left" to "left" with the result that the rotational speeds of the right and left wheels again may again be used to determine direction into which torque transfer is possible, i.e. the differential's ability in yaw rate change.

Reference is now made to the split-$\mu$ feed forward logic 10 connected to the adder means 5 for supplying an output signal to the adder means 5 to be added to the output (control) signal of the PID-controller 3.

Accordingly, locking of the LSD is dependent on the throttle input and on the steering wheel angle from the driver. More specifically, the driver's throttle input as measured by a throttle position sensing means is used to make a feed forward locking of the differential. In the adder means 5, the output signal of the split-$\mu$ feed forward logic 10 is added to the control signal created by the PID-controller 3 to create an improved control signal for supplying to the actuator to control the LSD.

Hence, the throttle input is interpreted as an acceleration request, with the result that if the throttle is pressed down rapidly a high acceleration is desired. The differential is locked according to the throttle request. Additionally, due to using a rate limiter, the steering wheel angle or the steering wheel turning rate is also taken into account. If the driver steers "actively", this is interpreted as a more active driving and therefore the differential is locked faster, thereby allowing a more responsive vehicle. The vehicle will gain better traction because of the engagement of the differential.

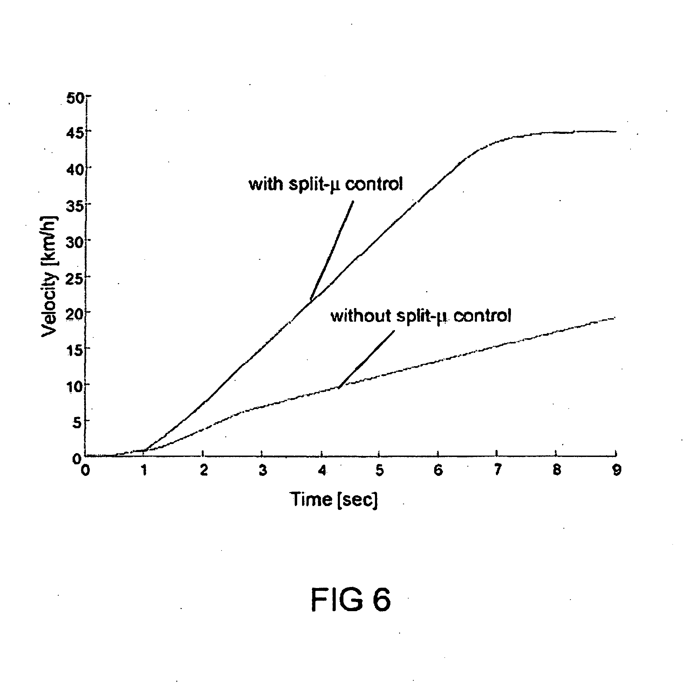

Reference is now made to FIG. 6 diagrammatically depicting as an example the vehicle velocity [km/h] over time [sec] of a vehicle driving on a split-$\mu$ surface. Accordingly, as can be taken from FIG. 6, upper curve, in case of an electronically controlled LSD using split-$\mu$ feed forward logic 10 for locking the LSD, the vehicle velocity is increased over the case of an open differential, lower curve.

Now, reference is made to the scenario identification logic 9, that on its input side, is provided with the measured yaw rate, the measured lateral acceleration, the wheel speeds, the clutch position, the engine torque and the steering wheel angle. Output signals of the scenario identification logic 9 are supplied to the PID-controller 3, the adaptation logic 7 and the processing means 11. The scenario identification logic 9 determines the current driving scenarios of the vehicle. The outputs from the scenario identification logic 9 are the current driving states and the parameters of the PID-controller, $K_p$, $K_i$ and $K_d$, which correspond to the wanted control behaviour of the control system. The parameters will be changed when the driving scenario changes.

Obviously many modifications and variations of the present invention are possible in light of the above description. It is therefore to be understood, that within the scope of appended claims, the invention may be practiced otherwise than as specifically devised.

While the invention has been described in detail and with reference to specific embodiments thereof, it will be apparent to one of skill in the art that various changes and modifications can be made therein without departing from the scope thereof. Accordingly, it is intended that the present invention covers the modifications and variations of this invention provided they come within the scope of the appended claims and their equivalents.

List of reference signs

1 System
2 Error signal forming means
3 PID-controller
4 Actuator
5 Adder means
6 Bicycle reference model logic
7 Adaptation logic
8 Ability signal logic
9 Scenario identification logic
10 Split-$\mu$ feed forward logic
11 Processing means

**Claims**

1. A method of controlling a clutch based limited slip differential (LSD) of a vehicle in a PID-controller based closed loop control system comprising:

   - a PID-controller (3) for controlling said LSD to control the vehicle's yaw rate, said PID-controller being adapted to create a control signal based on a yaw rate error as calculated on basis of reference and measured yaw rates, said control signal being supplied to an actuating means operatively coupled to said LSD for actuating thereon based on said control signal;
   - a split-$\mu$ feed forward logic (10) adapted for outputting a control signal to be added to the control signal of the PID-controller (3),
   - a reference yaw rate determination logic (6) for determining a reference yaw rate; and
   - an adaptation logic (7) for creating an adapted yaw rate error signal to be provided to said PID-controller, said adaptation logic being interconnected between said reference yaw rate determination logic and said PID-controller and being provided with said reference yaw rate and a measured yaw rate as measured by a yaw rate sensing means;

   wherein said method comprises the steps of:

   - sensing of the driver's throttle input and outputting a split-$\mu$ feed forward logic control signal formed in proportionality to the driver's throttle input;
   - adding of the split-$\mu$ feed forward logic control signal to the output signal of the PID-controller to create a control signal for controlling the LSD;

   - adapting said yaw rate error when releasing throttle in making a turn performed by said adaptation logic, which adaptation of the yaw rate error comprises the steps of:
   - initiating of adaptation of the yaw rate error;
   - dividing of the measured yaw rate by the reference yaw rate to calculate a yaw rate ratio at initiation of the adaptation; and
   - multiplying said yaw rate ratio with the reference yaw rate during said throttle off condition to create an adapted error rate signal to be supplied to said PID-controller.

2. The method of claim 1, further comprising a steering wheel angle sensing means for sensing of a wheel angle of the steering wheel, wherein said method comprises the step of sensing a steering wheel angle, and wherein said split-$\mu$ feeds forward logic control signal is limited in proportionality to said sensed steering wheel angle.

3. The method of claim 1, further comprising a steering wheel turning rate sensing means for sensing of a turning rate of the steering wheel, wherein said method comprises the step of sensing a steering wheel turning rate, and wherein said split-$\mu$ feed forward logic control signal is limited in proportionality to said sensed steering wheel turning rate.

4. The method of claim 1, in which said reference yaw rate is determined using a bicycle model.

5. The method according to any one of the preceding claims, in which said control system further comprises an ability signal logic (8) being provided with wheel speeds of the wheels coupled by said LSD and adapted for creating an ability signal based on a wheel speed difference, said ability signal logic being connected to said PID-controller for supplying said ability signal to said PID-controller to be multiplied with said yaw rate error; wherein said method comprising a step of deciding, in an at least partly engaged state of the LSD, whether said wheel speed difference may be used to determine possible torque transfer, with the wheel speed difference being used if a clutch position signal as sensed by a clutch position sensing means connected to said ability logic is sensed to be below a predetermined threshold value.

6. The method according to any one of the preceding claims, in which said control system further comprises an ability signal logic (8) being provided with wheel speeds of the wheels coupled by said LSD and adapted for creating an ability signal based on a wheel speed difference, said ability signal logic being connected to said PID-controller for supplying said ability signal to said PID-controller to be multiplied with said yaw rate error; wherein said method comprising a step of deciding, in an at least partly engaged state of the LSD, whether said wheel speed difference may be used to determine possible torque transfer, with the wheel speed difference being used if a clutch unlocking control signal instructing at least partial unlocking the LSD clutch is supplied to the actuating means.

7. The method according to claim 6, in which said clutch unlocking control signal is supplied to said actuating means in case a lateral acceleration of the vehicle as measured by a lateral acceleration sensing means connected to said ability signal logic goes below a predetermined threshold value, with the further condition that derivative thereof changes its sign.

8. The method of claim 6, in which said clutch unlocking control signal is supplied to said actuating means in case of throttle off communicated to said ability signal logic as sensed by a throttle input sensing means connected to said ability signal logic.

9. The method according to any one of the preceding claims, in which said control system further comprises an ability signal logic (8) being provided with wheel speeds of the wheels coupled by said LSD and adapted for creating an ability signal based on a wheel speed difference, said ability signal logic being connected to said PID-controller for supplying said ability signal to said PID-controller to be multiplied with said yaw rate error; wherein said method comprising a step of deciding, in an at least partly engaged state of the LSD, whether said wheel speed difference may be used to determine possible torque transfer, with the wheel speed difference being used if said measured yaw rate of the vehicle changes its sign.

**Patentansprüche**

1. Verfahren zur Steuerung eines kupplungsbasierten Differentials mit begrenztem Schlupf (Limited Slip Differential, LSD) eines Fahrzeugs in einem geschlossenen Regelsystem auf der Basis eines PID-Reglers, umfassend:

   - einen PID-Regler (3) zur Steuerung des LSD, um die Gierrate des Fahrzeugs zu steuern, wobei der PID-Regler ausgebildet ist, ein Steuersignal auf der Basis eines Gierratenfehlers zu erzeugen, der auf der Basis von Bezugs-und Messgierraten berechnet wird, wobei das Steuersignal an ein Stellmittel gesendet wird, das operativ an das LSD gekoppelt ist, um auf der Basis des Steuersignals darauf einzuwirken;

   - eine Split-μ-Vorwärtskopplungslogik (10), die ausgebildet ist, ein Steuersignal auszugeben, das zum Steuersignal des PID-Reglers (3) hinzuzufügen ist;
   - eine Bezugsgierraten-Bestimmungslogik (6), um eine Bezugsgierrate zu bestimmen; und
   - eine Anpassungslogik (7) zum Erzeugen eines angepassten Gierratenfehlersignals, das an den PID-Regler zu senden ist, wobei die Anpassungslogik zwischen die Bezugsgierraten-Bestimmungslogik und den PID-Regler geschaltet ist und mit der Bezugsgierrate und einer gemessenen Gierrate versorgt wird, die von einem Gierraten-Erfassungsmittel gemessen wird;

   wobei das Verfahren die folgenden Schritte umfasst:

   - Erfassen der Gaspedalstellung des Fahrers und Ausgeben eines Steuersignals der Split-μ-Vorwärtskopplungslogik, das proportional zur Gaspedalstellung des Fahrers gebildet wird;
   - Hinzufügen des Steuersignals der Split-μ-Vorwärtskopplungslogik zum Ausgabesignal des PID-Reglers, um ein Steuersignal zur Steuerung des LSD zu erzeugen;
   - durch die Anpassungslogik erfolgendes Anpassen des Gierratenfehlers, wenn das Gaspedal beim Fahren einer Kurve losgelassen wird, wobei die Anpassung des Gierratenfehlers die folgenden Schritte umfasst:
   - Initiieren der Anpassung des Gierratenfehlers;
   - Dividieren der gemessenen Gierrate durch die Bezugsgierrate, um bei der Initiierung der Anpassung ein Gierratenverhältnis zu berechnen; und
   - Multiplizieren des Gierratenverhältnisses mit der Bezugsgierrate während des Zustands mit losgelassenem Gaspedal, um ein angepasstes Fehlerratensignal zu erzeugen, das an den PID-Regler zu senden ist.

2. Verfahren nach Anspruch 1, darüber hinaus umfassend ein Mittel zur Erfassung des Lenkradwinkels, um einen Einschlagwinkel des Lenkrads zu ermitteln, wobei das Verfahren den Schritt des Erfassens des Lenkradwinkels umfasst und wobei das Steuersignal der Split-μ-Vorwärtskopplungslogik proportional zu dem ermittelten Lenkradwinkel begrenzt ist.

3. Verfahren nach Anspruch 1, darüber hinaus umfassend Lenkraddrehgeschwindigkeits-Erfassungsmittel, um eine Drehgeschwindigkeit des Lenkrads zu ermitteln, wobei das Verfahren den Schritt des Erfassens der Drehgeschwindigkeit des Lenkrads umfasst und wobei das Steuersignal der Split-μ-Vorwärtskopplungslogik proportional zu der ermittelten Drehgeschwindigkeit des Lenkrads begrenzt ist.

**4.** Verfahren nach Anspruch 1, wobei die Bezugsgierrate mit Hilfe eines Zweiradmodells bestimmt wird.

**5.** Verfahren nach einem der vorhergehenden Ansprüche, wobei das Steuersystem darüber hinaus eine Fähigkeitssignallogik (8) umfasst, die mit den Radgeschwindigkeiten der Räder versorgt wird, die durch das LSD gekoppelt sind, und die geeignet ist, auf der Basis einer Radgeschwindigkeitsdifferenz ein Fähigkeitssignal zu erzeugen, wobei die Fähigkeitssignallogik mit dem PID-Regler verbunden ist, um das Fähigkeitssignal an den PID-Regler zu senden, damit dieses mit dem Gierratenfehler multipliziert wird; wobei das Verfahren einen Schritt umfasst, in dem in einem mindestens teilweise eingerückten Zustand des LSD bestimmt wird, ob die Radgeschwindigkeitsdifferenz verwendet werden kann, um eine mögliche Drehmomentübertragung zu bestimmen, wobei die Radgeschwindigkeitsdifferenz verwendet wird, wenn ein Kupplungspositionssignal, das von einem Kupplungspositionserfassungsmittel ermittelt wird, das mit der Fähigkeitslogik verbunden ist, als unter einem bestimmten Schwellenwert befindlich erkannt wird.

**6.** Verfahren nach einem der vorhergehenden Ansprüche, wobei das Steuersystem darüber hinaus eine Fähigkeitssignallogik (8) umfasst, die mit den Radgeschwindigkeiten der Räder versorgt wird, die durch das LSD gekoppelt sind, und die geeignet ist, auf der Basis einer Radgeschwindigkeitsdifferenz ein Fähigkeitssignal zu erzeugen, wobei die Fähigkeitssignallogik mit dem PID-Regler verbunden ist, um das Fähigkeitssignal an den PID-Regler zu senden, damit dieses mit dem Gierratenfehler multipliziert wird; wobei das Verfahren einen Schritt umfasst, in dem in einem mindestens teilweise eingerückten Zustand des LSD bestimmt wird, ob die Radgeschwindigkeitsdifferenz verwendet werden kann, um eine mögliche Drehmomentübertragung zu bestimmen, wobei die Radgeschwindigkeitsdifferenz verwendet wird, wenn ein Kupplungsentriegelungs-Steuersignal, das eine mindestens teilweise Entriegelung der LSD-Kupplung befiehlt, an das Stellmittel gesendet wird.

**7.** Verfahren nach Anspruch 6, wobei das Kupplungsentriegelungs-Steuersignal in dem Fall an das Stellmittel gesendet wird, dass eine seitliche Beschleunigung des Fahrzeugs, die von einem Mittel zur Erfassung der seitlichen Beschleunigung erfasst wird, das mit der Fähigkeitslogik verbunden ist, unter einen vorbestimmten Schwellenwert geht, mit der weiteren Bedingung, dass der Differentialquotient sein Vorzeichen ändert.

**8.** Verfahren nach Anspruch 6, wobei das Kupplungsentriegelungs-Steuersignal in dem Fall an das Stellmittel gesendet wird, dass der Fähigkeitssignallogik ein Loslassen des Gaspedals mitgeteilt wird, das von einem mit der Fähigkeitssignallogik verbundenen Mittel zur Erfassung der Fahrtregelung erkannt wird.

**9.** Verfahren nach einem der vorhergehenden Ansprüche, wobei das Steuersystem darüber hinaus eine Fähigkeitssignallogik (8) umfasst, die mit den Radgeschwindigkeiten der Räder versorgt wird, die durch das LSD gekoppelt sind, und die geeignet ist, auf der Basis einer Radgeschwindigkeitsdifferenz ein Fähigkeitssignal zu erzeugen, wobei die Fähigkeitssignallogik mit dem PID-Regler verbunden ist, um das Fähigkeitssignal an den PID-Regler zu senden, damit dieses mit dem Gierratenfehler multipliziert wird; wobei das Verfahren einen Schritt umfasst, in dem in einem mindestens teilweise eingerückten Zustand des LSD bestimmt wird, ob die Radgeschwindigkeitsdifferenz verwendet werden kann, um eine mögliche Drehmomentübertragung zu bestimmen, wobei die Radgeschwindigkeitsdifferenz verwendet wird, wenn die gemessene Gierrate des Fahrzeugs ihr Vorzeichen ändert.

**Revendications**

**1.** Procédé pour contrôler un différentiel à glissement limité (DGL) basé sur l'embrayage d'un véhicule dans un système en boucle fermée basé sur un contrôleur PID, comprenant :

    - un contrôleur PID (3) pour contrôler ledit DGL afin de contrôler le taux de lacet du véhicule, ledit contrôleur PID étant adapté pour créer un signal de commande sur la base d'une erreur de taux de lacet calculée à partir de taux de lacet de référence et mesurés, lequel signal de commande est fourni à un moyen d'actionnement en liaison opérationnelle avec ledit DGL pour agir sur celui-ci en fonction dudit signal de commande ;
    - une logique prédictive $\mu$-split (10) adaptée pour émettre en sortie un signal de commande à ajouter au signal de commande du contrôleur PID (3),
    - une logique de détermination du taux de lacet de référence (6) pour déterminer un taux de lacet de référence ; et
    - une logique adaptative (7) pour créer un signal d'erreur de taux de lacet adapté à fournir audit contrôleur PID, ladite logique adaptative étant interconnectée entre ladite logique de détermination du taux de lacet de référence et ledit contrôleur PID et recevant ledit taux de lacet de référence et un taux de lacet mesuré par un moyen de détection du taux de lacet ;

lequel procédé comprend les étapes de :

- détection de l'action du conducteur sur le papillon des gaz et émission en sortie d'un signal de commande de logique prédictive μ-split formé proportionnellement à l'action du conducteur sur les gaz ;
- ajout du signal de commande de logique prédictive μ-split au signal de sortie du contrôleur PID pour créer un signal de commande pour contrôler le DGL ;
- adaptation de ladite erreur de taux de lacet lorsque le papillon des gaz est relâché par un cycle exécuté par ladite logique adaptative, laquelle adaptation de l'erreur de taux de lacet comprend les étapes de :

- début de l'adaptation de l'erreur de taux de lacet ;
- division du taux de lacet mesuré par le taux de lacet de référence pour calculer un rapport de taux de lacet au début de l'adaptation ; et
- multiplication dudit rapport de taux de lacet par le taux de lacet de référence pendant ledit état d'inactivité du papillon des gaz ; et
- multiplication dudit rapport de taux de lacet par le taux de lacet de référence pendant ledit état d'inactivité du papillon des gaz pour créer un signal de taux d'erreur adapté à fournir audit contrôleur PID.

2. Procédé selon la revendication 1, comprenant en outre un moyen de détection de l'angle du volant destiné à détecter un angle du volant, lequel procédé comprend l'étape de détection d'un angle du volant, et dans lequel ledit signal de commande de logique prédictive μ-split est limité proportionnellement audit angle de volant détecté.

3. Procédé selon la revendication 1, comprenant en outre un moyen de détection de la vitesse de rotation du volant pour détecter une vitesse de rotation du volant, lequel procédé comprend l'étape de détection d'une vitesse de rotation du volant, et dans lequel ledit signal de commande de logique prédictive μ-split est limité proportionnellement à ladite vitesse de rotation du volant détectée.

4. Procédé selon la revendication 1, dans lequel ledit taux de lacet de référence est déterminé en utilisant un modèle de deux-roues.

5. Procédé selon l'une quelconque des revendications précédentes, dans lequel ledit système de commande comprend en outre une logique de signal de capacité (8) recevant des vitesses de roue des roues couplées par ledit DGL et adaptées pour créer un signal de capacité en fonction d'une différence de vitesses des roues, ladite logique de signal de capacité étant connectée audit contrôleur PID afin de fournir ledit signal de capacité au contrôleur PID pour qu'il soit multiplié par ladite erreur de taux de lacet ; ledit procédé comprenant une étape de décision, dans un état au moins partiellement engagé du DGL, du fait que ladite différence de vitesse des roues peut ou non être utilisée pour déterminer un transfert de couple possible, la différence de vitesse des roues étant utilisée si un signal de position d'embrayage détecté par un moyen de détection de la position d'embrayage connecté à ladite logique de capacité est détecté en dessous d'une valeur de seuil prédéterminée.

6. Procédé selon l'une quelconque des revendications précédentes, dans lequel ledit système de commande comprend en outre une logique de signal de capacité (8) recevant des vitesses de roue des roues couplées par ledit DGL et adaptées pour créer un signal de capacité en fonction d'une différence de vitesses des roues, ladite logique de signal de capacité étant connectée audit contrôleur PID afin de fournir ledit signal de capacité au contrôleur PID pour qu'il soit multiplié par ladite erreur de taux de lacet ; ledit procédé comprenant une étape de décision, dans un état au moins partiellement engagé du DGL, du fait que ladite différence de vitesse des roues peut ou non être utilisée pour déterminer un transfert de couple possible, la différence de vitesse des roues étant utilisée si un signal de commande de déverrouillage de l'embrayage demandant au moins le déverrouillage partiel de l'embrayage DGL est fourni au moyen d'actionnement.

7. Procédé selon la revendication 6, dans lequel ledit signal de commande de déverrouillage de l'embrayage est fourni audit moyen d'actionnement si une accélération latérale du véhicule mesurée par un moyen de détection de l'accélération latérale connecté à ladite logique de signal de capacité passe en dessous d'une valeur de seuil prédéterminée, avec la condition supplémentaire que sa dérivée change de signe.

8. Procédé selon la revendication 6, dans lequel ledit signal de commande de déverrouillage de l'embrayage est fourni audit moyen d'actionnement en cas de désactivation du papillon des gaz transmise à ladite logique de signal de capacité telle qu'elle est captée par un moyen de détection de l'entrée de papillon des gaz connecté à ladite.

9. Procédé selon l'une quelconque des revendications précédentes, dans lequel ledit système de commande comprend en outre une logique de signal de capacité (8) recevant des vitesses de roue des roues couplées par ledit DGL et adaptées pour créer un signal de capacité sur la base d'une différence de roues, ladite logique de signal de capacité étant connectée audit contrôleur PID pour fournir ledit signal de capacité audit contrôleur PID afin qu'il soit multiplié par ladite erreur de taux de lacet ; ledit procédé comprenant l'étape de décision, dans un état au moins partiellement engagé du DGL, du fait que ladite vitesse de différence des roues peut ou non être utilisée pour déterminer un transfert de couple possible, la vitesse de différence des roues étant utilisée si ledit taux de lacet mesuré du véhicule change de signe.

FIG 1

EP 1 886 864 B1

FIG 2

FIG 3

FIG 4

FIG 5

FIG 6

FIG 7

**EP 1 886 864 B1**

**REFERENCES CITED IN THE DESCRIPTION**

**Patent documents cited in the description**

- DE 4423965 A1